# EUROPEAN PATENT APPLICATION

(11) **EP 4 410 610 A2**
(43) Date of publication of application: **07.08.2024**
(21) Application number: 24154573.0
(22) Date of filing: 30.01.2024
(51) Int. Cl.: B60R 25/04, B62H 5/00

(54) **LOCK SYSTEM FOR TWO WHEELED VEHICLES**

(30) Priority: 06.02.2023 IN 202341007294
(71) Applicant: TVS Motor Company Limited, 600006 Chennai (IN)
(72) Inventor: Mahendran, Rajendran, 600006 Chennai (IN); Kaushik, Rahul, 600006 Chennai (IN); Zanpure, Chaitanya Rajendra, 600006 Chennai (IN); Sagare, Datta Rajaram, 600006 Chennai (IN)
(74) Representative: Patentanwaltskanzlei Matschnig & Forsthuber OG

(57) **Abstract**

A locking system (100) for two wheeled vehicles which is designed to securely lock the user article (202) with the help of locking unit (200). The locking system (100) also has a control unit to control the mobilization or immobilisation of the vehicle depending upon satisfying the pre set conditions where pre set conditions includes the wearing of the head protective equipment such as head safety guard to start the vehicle. Additionally, it also prevents the theft of the user article by providing a locking unit (200) for the user articles. It provides safety of the user article by securely locking it and safety of the rider by compelling the rider to wear head safety guard.

## Description

### TECHNICAL FIELD

The present subject matter relates to a lock system for two wheeled vehicles. More particularly, the present invention relates to a locking system which shall detect the usage of head safety guard by the rider and allow the vehicle ignition once the safety of the rider has been ensured by wearing the head safety guard. Additionally, it also prevents the theft of the user articles by providing a locking unit for the user articles.

### BACKGROUND

A vehicle, generally a two wheeled vehicle requires the rider to wear a head safety guard such as helmet for his own safety. In fact, some jurisdictions penalize the riders for not wearing head safety guards. However, it is difficult to monitor the enforcement of such rules which requires the rider to wear head safety guard while riding as rider may face lot of issues relating to storage of the head safety guard as well. Theft is a common issue faced by riders due to lack of proper storage and locking mechanism for user articles such as head safety guard used by the rider.

This results in a situation where user may not wear helmet due to reasons like helmet has been stolen or lack of place to keep helmet safely. Thus, it leads to putting the rider in an extremely dangerous situation of riding two wheeled vehicle with helmet. This scenario had led to the increased number of accidents and deaths.

The World Health Organization states that 1.2 million people lose their lives annually due to road traffic injuries. More than half of the deaths caused affect the riders of two wheelers in the form of head injuries. Most of these deaths are preventable by the compulsory use of helmets. Studies have shown that wearing a helmet can reduce the fatalities by 70%. Global initiatives have been taken to make helmets a high priority for public health. Many awareness drives have been launched, laws have been enforced in the public interests but still we find people violating the rules and driving very casually without wearing helmets and thereby risking their lives.

Helmet industry is focusing on incorporating entertainment and communication features in the helmet such as microphone, speaker etc. However, these features would only serve the purpose if rider is wearing helmet. Thus major object lies in compelling rider to wear the helmet and features of entertainment and communication can be a secondary issue.

Known art in this domain to prevent the road accidents works on alcohol detection with the help of alcohol sensors to prevent drunken driving. Some systems in the known art works on detection of rider wearing helmet at the start of the vehicle only via Infrared Sensors.

Thus, it is important to have a system which works on a principle where vehicle will not start unless the rider wears the head protective equipment such as any head safety guard like helmet.

However, there are certain drawbacks of the known systems such as it does not ensure continuous safety of the rider throughout riding the vehicle as known systems compels the rider to wear helmet only to start the vehicle. A system having continuous monitoring to ensure continuous wearing of the helmet by the rider in order to achieve continuous safety of the rider is desirable.

It is also an object of the present invention to provide a keyless igniting system which may work on wireless technology that automatically turns on the engine by starting the vehicle after ensuring the rider has worn the helmet.

The present invention is a locking system for a vehicle comprises of a control unit which is configured to control mobilisation and immobilisation of the vehicle and a locking unit which is configured to secure at least one user article on the vehicle and being communicatively connected to the control unit. The locking system ensures the safety of the user article as well.

### SUMMARY

The foregoing summary is illustrative only and is not intended to be in any way limiting. In addition to the illustrative aspects, embodiments, and features described above, further aspects, embodiments, and features will become apparent by reference to the drawings and the following detailed description.

According to embodiments illustrated herein, the present disclosure provides a locking system for a vehicle comprises of a control unit which is configured to control mobilisation and immobilisation of the vehicle and a locking unit which is configured to secure at least a user article on the vehicle and being communicatively connected to the control unit. The control unit is configured to mobilise or immobilize the vehicle upon satisfaction of first and second set of pre-defined conditions.

According to embodiments illustrated herein, the present disclosure also discloses a method for of operating a locking system of the vehicle.

According to embodiments illustrated herein, the present disclosure also discloses a method (300) of operating a locking system (100) of a vehicle comprises steps of inserting, an ignition key into a key hub of the vehicle to start vehicle ignition, unlocking, a head safety guard (202) to provide access to the head safety guard to a rider, detecting, a wearing of the head safety guard (202) by an imaging device, continuous monitoring, of rider during running condition of the vehicle wherein during running condition the rider being continuously monitored to detect wearing of the head safety guard (202), determining, a running speed of the vehicle, wherein upon determination of the running speed being greater than a pre-defined limit a control unit being configured to actuate a mode change from a power mode to an economy mode when the rider fails to wear the head safety guard (202).

### BRIEF DESCRIPTION OF THE DRAWINGS

The present invention will become more fully understood from the detailed description given herein below and the accompanying drawings which are given by way of illustration only, and thus are not limitative of the present invention, and wherein
Fig. 1 exemplarily illustrates a handlebar of the two wheeled vehicle depicting locking system, in accordance with some embodiments of the present disclosure.
Fig. 2a exemplarily illustrates a right handlebar having the head safety guard hanging on it, in accordance with some embodiments of the present disclosure.
Fig. 2b exemplarily illustrates a section view of the handlebar having head safety guard hanging on it which is securely locked with the help of extensible connecting unit, in accordance with some embodiments of the present disclosure.
Fig. 3a and Fig. 3b exemplarily illustrates a flowchart showing method for operating a locking system of a vehicle, in accordance with some embodiments of the present disclosure.

### DETAILED DESCRIPTION OF THE INVENTION

The present disclosure may be best understood with reference to the detailed figures and description set forth herein. Various embodiments are discussed below with reference to the figures. However, those skilled in the art will readily appreciate that the detailed descriptions given herein with respect to the figures are simply for explanatory purposes as the methods and systems may extend beyond the described embodiments. For example, the teachings presented, and the needs of a particular application may yield multiple alternative and suitable approaches to implement the functionality of any detail described herein. Therefore, any approach may extend beyond the particular implementation choices in the following embodiments described and shown.

References to "one embodiment," "at least one embodiment," "an embodiment," "one example," "an example," "for example," and so on indicate that the embodiment(s) or example(s) may include a particular feature, structure, characteristic, property, element, or limitation but that not every embodiment or example necessarily includes that particular feature, structure, characteristic, property, element, or limitation. Further, repeated use of the phrase "in an embodiment" does not necessarily refer to the same embodiment.

The present invention now will be described more fully hereinafter with different embodiments. This invention may, however, be embodied in many different forms and should not be construed as limited to the embodiments set forth herein; rather those embodiments are provided so that this disclosure will be thorough and complete, and fully convey the scope of the invention to those skilled in the art.

The present subject matter is further described with reference to accompanying figures. It should be noted that the description and figures merely illustrate principles of the present subject matter. Various arrangements may be devised that, although not explicitly described or shown herein, encompass the principles of the present subject matter. Moreover, all statements herein reciting principles, aspects, and examples of the present subject matter, as well as specific examples thereof, are intended to encompass equivalents thereof.

The present invention is illustrated as locking system for a vehicle comprises of a control unit which is configured to control mobilisation and immobilisation of the vehicle and a locking unit which is configured to secure at least one user article on the vehicle and being communicatively connected to the control unit. The locking system ensures the safety of the at least one user article as well.

In addition, the present subject matter also ensures the safety of the rider as the vehicle mobilisation does not occur if the rider fails to wear the head safety guard.

It is an object of the present subject matter to ensure the safety of the rider and safety of the user article wherein the at least one user article can be head safety guard like helmet, or any other user article which user desires to hang on the handlebar and secure it with the locking unit.

Head safety guard is an immensely important protective equipment for the riders of two wheeled vehicles. However, due to either theft issues, or lack of storage area to keep the protective equipment such as head safety guard like helmet, user tends to avoid wearing it which results in head injuries and it can be fatal too.

To solve the above problem, the present subject matter aims to compel the rider to wear the head safety guard by controlling the vehicle mobilisation only after satisfying the condition if the rider is wearing the head safety guard. Even in running condition of the vehicle, continuous monitoring of the rider will be present in order to make sure that the rider is wearing the head safety guard after the start of the vehicle.

Even for cases, where the rider removes the head safety guard during the running condition of the vehicle, the control unit will detect this change and begins to change the mode of the running vehicle gradually from power to economy so as to lower the speed of the vehicle in order to protect the rider in case any accident occur, the rider would not be injured due to reduced impact of potential collisions.

Thus, the present subject matter ensures the safety of the rider at different stages. A first stage being to not let the vehicle start without rider wearing the head safety guard. A second stage being to monitor the rider continuously and providing warning signs in form of either audio or video or both if the rider removes the head safety guard. A third stage being to change from power to economy mode gradually if the rider removes the helmet during running condition of the vehicle and providing warning signs again to compel the rider to wear the head safety guard.

In addition, the locking system also provides a locking unit to securely keep the at least one user article which may include head safety guard or like and locking it with the help of extensible connecting unit.

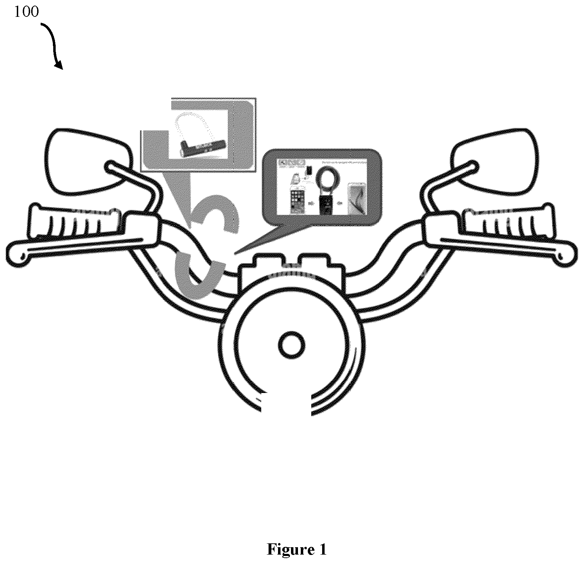

Fig. 1 exemplarily illustrates a handlebar of the two wheeled vehicle showing locking system. The handlebar shows the steering column, pair of rear-view mirrors, speedometer, locking unit of the locking system, and an imaging device. The locking system comprises a control unit to control mobilization and immobilization of the vehicle, a locking unit to securely lock the user articles such as head safety guard or like wherein the locking unit is communicatively connected to the control unit.

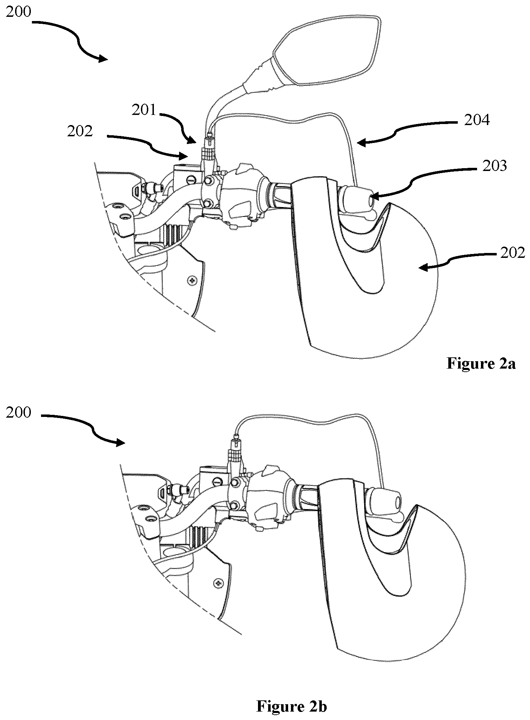

Fig. 2a exemplarily illustrates a right handlebar having the head safety guard hanging on it. The locking unit can be mounted on any portion of the handlebar. Fig. 2 specifically shows the locking unit on the right handlebar; however the locking unit is disposed in Figure 2 for illustration purposes and the same shall not be construed to limit the disposition of the locking unit with reference to any portion of the handlebar. The locking unit comprises a locking knob, a housing portion to secure a locking knob, an extensible connecting unit being connected to the housing portion at one end and the locking knob at other end and a locking portion to receive the locking knob and detachably attach with the locking knob.

Fig. 2b exemplarily illustrates a section view of the handlebar having head safety guard hanging on it which is securely locked with the help of extensible connecting unit. It clearly shows the locking of the head safety guard with the help of extensible connecting unit, and a locking knob and locking portion.

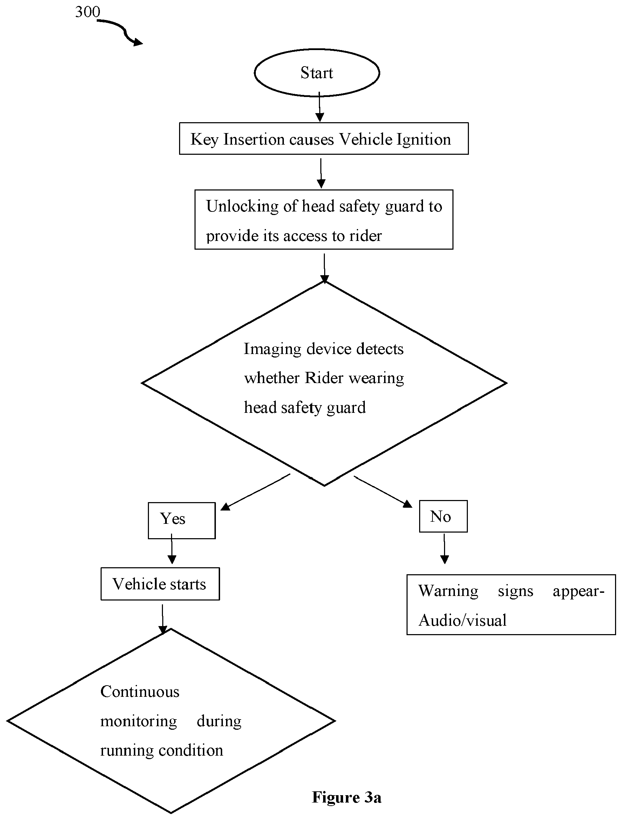

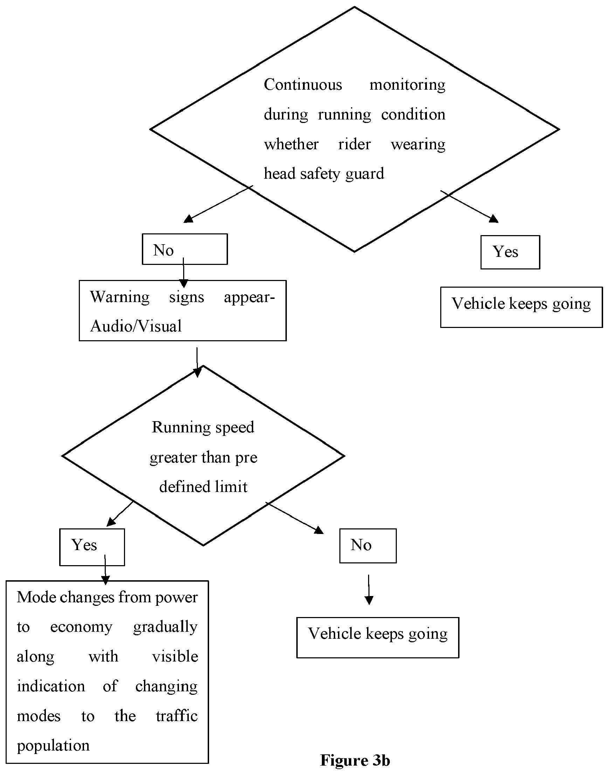

Fig. 3a and Fig. 3b exemplarily illustrates a flowchart showing method for operating a locking system of a vehicle. Fig. 3a shows the steps of the method of operating the locking system of the vehicle where the method comprises of a first step of insertion of key into key hub leads to start the vehicle ignition followed by unlocking of head safety guard in order to provide access to rider followed by detecting whether the rider has worn the head safety guard with the help of an imaging device followed by continuous monitoring of the rider during running condition of the vehicle whether the rider wearing the head safety guard followed by determining running speed of the vehicle whether greater than pre-defined limit; and changing of mode from power to economy if the rider fails to wear the safety head guard.

In an embodiment, the imaging device can be disposed on any of the rear-view mirrors.

In an embodiment, the control unit being configured to mobilise the vehicle upon satisfaction of first set of pre-defined conditions wherein first set of pre-defined conditions being when the control unit receives a signal indicating removal of an article from the self-locking unit; and when the control unit receives a signal from the rider recognition unit indicating a user article being worn by a rider.

In other embodiment, the control unit being configured to immobilise the vehicle upon satisfaction of second set of pre-defined conditions wherein second set of pre-defined conditions being when the control unit receives a signal indicating insertion of the article into the self-locking unit.

In other embodiment, the locking system may have a personal digital assistant of the rider being communicatively connected to the locking unit. The personal digital assistant may be an application on user device such as mobile.

In one embodiment, the locking unit of the locking system may have the housing portion which is mounted to a handle grip portion of the vehicle.

In one embodiment, locking unit includes at least two states of locking comprises of a first state of locking and a second state of locking wherein the first state of locking being when the user article being inserted in the handlebar when the user article is secured through the extensible connecting unit and the locking knob detachably attaches to the locking unit and the second state of self-locking being when the user article being removed from the handlebar and the locking knob retracting to the housing unit through the extensible connecting unit.

In other embodiment, wherein the first state of locking being activated upon removal of an ignition key from the key hub of the vehicle and the second state of locking being activated upon insertion of the ignition key in the key hub of the vehicle.

In another embodiment, a cluster unit which is being mounted on the handlebar of the vehicle, wherein the cluster unit being communicatively connected to the locking unit, and displaying one of the at least two states of locking.

In one embodiment, wherein the locking unit being configured to send one of the at least two states of locking to the personal digital assistant as input.

In one embodiment, the method of operating the locking system of the vehicle wherein based on the continuous monitoring of the rider during running condition of the vehicle whether the rider wearing the head safety guard, there arises a situation where if the rider satisfies pre-condition of wearing the head safety guard during mobilisation of the vehicle, vehicle keeps mobilizing.

In one embodiment, the method of operating the locking system of the vehicle wherein based on the continuous monitoring of the rider during running condition of the vehicle whether the rider wearing the head safety guard, there arises a situation where if the rider fails to satisfy the pre-condition of wearing the head safety guard during mobilisation of the vehicle, warning signs appear to warn the rider to wear the head safety guard.

In one embodiment, the warning signs can be either a beep sound, or an illumination of an indication lamp or tell-tale lamp or display showing a message to wear the head safety guard and like and haptic feedback in the form of vibrations so as to warn the rider to wear the head safety guard..

In other embodiment, the method of operating the locking system of the vehicle wherein based on the determination of running speed of the vehicle whether greater than pre-defined speed limit, there arises a situation where if the speed of the vehicle is greater than the pre-defined speed limit, the mode of the vehicle changes gradually from power to economy.

In other embodiment, the method of operating the locking system of the vehicle wherein based on the determination of running speed of the vehicle whether greater than pre-defined speed limit, there arises a situation where if the speed of the vehicle is less than the pre-defined speed limit, the vehicle keeps mobilising.

In other embodiment, the method of operating the locking system of the vehicle wherein if the rider fails to satisfy the pre-condition of wearing the head safety guard, warning signs appear to warn the rider to wear the head safety guard, wherein warning signs can be either in form of audio or visual or both.

In other embodiment, the method of operating the locking system of the vehicle wherein if the rider fails to satisfy the pre-condition of wearing the head safety guard during mobilisation of the vehicle, warning signs appear to warn the rider to wear the head safety guard, wherein warning signs can be either in form of audio or visual or both.

In other embodiment, the method of operating the locking system of the vehicle wherein changing of mode from power to economy if the rider fails to wear the safety head guard, wherein power mode is when speed of the vehicle is above 20kmph.

In other embodiment, the method of operating the locking system of the vehicle wherein changing of mode from power to economy if the rider fails to wear the safety head guard, wherein economy mode is when speed of the vehicle is below 20kmph.

In other embodiment, the method of operating the locking system of the vehicle wherein changing of mode from power to economy happens, warning signs in either audio or visual forms appear to serve dual purpose. One is to inform the rider that the mode is going to change and other is to inform traffic population around rider so as to avoid accident. If the warning signs will not appear, it will lead to a situation where a vehicle running at 80kmph and rider removes the head safety guard, the vehicle will start lowering the speed by entering into economy mode from power mode without giving any indication to rest of the traffic population which can cause the traffic coming from behind uninformed about the mode change and can lead to hard hit to the rider's vehicle resulting into accidents and injuries and other casualties. Thus, the warning signs during power change is an important embodiment not just for rider but for traffic population as well.

A person with ordinary skills in the art will appreciate the components, method, structure and its arrangement that have been illustrated and explained to serve as examples and should not be considered limiting in any manner. It will be further appreciated that the variants of the above disclosed subject matter, and other features and functions, or alternatives thereof, may be combined to create other different systems or applications.

While the present disclosure has been described with reference to certain embodiments, it will be understood by those skilled in the art that various changes may be made, and equivalents may be substituted without departing from the scope of the present disclosure. In addition, many modifications may be made to adapt a particular situation or material to the teachings of the present disclosure without departing from its scope. Therefore, it is intended that the present disclosure not be limited to the particular embodiment disclosed, but that the present disclosure will include all embodiments falling within the scope of the appended claims.

Improvements and modifications may be incorporated herein without deviating from the scope of the invention.

## Claims

1. A locking system (100) for a vehicle, the locking system (100) comprises:
a control unit, the control unit being configured to mobilise and immobilise the vehicle;
a locking unit (200), the locking unit (200) being configured to secure at least one user article (205) on the vehicle and wherein the locking unit (200) being communicatively connected to the control unit;
wherein,
the control unit being configured to
mobilise the vehicle upon satisfaction of first
set of pre-defined conditions; and
immobilise the vehicle upon satisfaction of
second set of pre-defined conditions.

2. The locking system (100) for the vehicle as claimed in claim 1, wherein the first set of pre-defined conditions being
when the control unit receives a signal indicating removal of the at least one user article (205) from the locking unit (200); and
when the control unit receives a signal from a n imaging device indicating the at least one user article (205) being worn by a rider.

3. The locking system (100) for the vehicle as claimed in claim 1, wherein the second set of pre-defined conditions being when the control unit receives a signal indicating insertion of the at least one user article (205) into the locking unit (200).

4. The locking system (100) for the vehicle as claimed in claim 1, wherein a personal digital assistant of the rider being communicatively connected to the locking unit (200).

5. A locking unit (200), the locking unit (200) comprises:
a locking knob (201);
a locking portion (202), the locking portion (202) being configured to:
receive the locking knob (201), and
detachably attach with the locking knob (201);
a housing portion (203), the housing portion (203) housing an extensible connecting unit (204), wherein
the extensible connecting unit (204) being connected to the housing portion (203) at one end and the locking knob (201) at other end.

6. The locking unit (200) as claimed in claim 5, wherein the housing portion (203) of the locking unit (200) being mounted to a handle grip portion of the vehicle.

7. The locking unit (200) as claimed in claim 5, wherein the locking unit (200) includes at least two states of locking comprises of a first state of locking and a second state of locking.

8. The locking unit (200) as claimed in claim 7, wherein the first state of locking being when the at least one user article (205) being inserted in the handle grip portion when the at least one user article (205) being secured by detachably attaching the locking knob to the locking portion (202) by the extensible connecting unit (204).

9. The locking unit (200) as claimed in claim 7, wherein the second state of locking being the at least one user article (205) being removed from the handle grip portion by the locking knob (201) retracting to the housing unit (203) through the extensible connecting unit (204).

10. The locking unit (200) as claimed in claim 7, wherein the first state of locking being activated upon removal of an ignition key from a key hub of the vehicle.

11. The locking unit (200) as claimed in claim 7, wherein the second state of locking being activated upon insertion of the ignition key in the key hub of the vehicle.

12. The locking unit (200) as claimed in claim 5, wherein a cluster unit being mounted on the handle grip portion of the vehicle, wherein the cluster unit being communicatively connected to the locking unit (200) and displaying one of the at least two states of locking.

13. The locking system (100) for the vehicle as claimed in claim 1, wherein a personal digital assistant of the rider being communicatively connected to the locking unit (200).

14. The locking system (100) for the vehicle as claimed in claim 13, wherein the locking unit being configured to send one of the at least two states of locking to the personal digital assistant as input.

15. A method (300) of operating a locking system (100) of a vehicle comprises steps of:
inserting, an ignition key into a key hub of the vehicle to start vehicle ignition;
unlocking, a head safety guard (202) to provide access to the head safety guard to a rider;
detecting, a wearing of the head safety guard (202) by an imaging device;
continuous monitoring, of rider during running condition of the vehicle
wherein during running condition the rider being continuously monitored to detect wearing of the head safety guard (202);
determining, a running speed of the vehicle,
wherein upon determination of the running speed being greater than a pre-defined limit a control unit being configured to actuate a mode change from a power mode to an economy mode when the rider fails to wear the head safety guard (202).

16. The method (300) of operating the locking system (100) of the vehicle as claimed in claim 15, wherein a imaging device being configured to continuously monitor the rider during running condition and wherein the imaging device being communicatively connected to a control unit.

17. The method (300) of operating the locking system (100) of the vehicle as claimed in claim 16, wherein the control unit being configured to
actuate warning signs when the head safety gear (202) being removed from a rider's head,
wherein the warning signs being configured to warn the rider to wear the head safety guard (202).

18. The method (300) of operating the locking system (100) of the vehicle as claimed in claim 15, wherein based on the continuous monitoring of the rider during running condition of the vehicle whether the rider wearing the head safety guard (202), there arises two situations;
if the rider satisfies pre-condition of wearing the head safety guard (202) during mobilisation of the vehicle, vehicle keeps mobilising;
if the rider fails to satisfy the pre-condition of wearing the head safety guard (202) during mobilisation of the vehicle, warning signs appear to warn the rider to wear the head safety guard (202).

19. The method (300) of operating the locking system (100) of the vehicle as claimed in claim 15, wherein on the determination of running speed of the vehicle, the control unit is configured to
actuate mode change gradually from the power mode to the economy mode when the running speed being greater than the pre-defined speed limit; and
if the speed of the vehicle is less than the pre defined speed limit, the vehicle keeps mobilising.

20. The method (300) of operating the locking system (100) of the vehicle as claimed in claim 15, wherein if the rider fails to satisfy the pre-condition of wearing the head safety guard, warning signs appear to warn the rider to wear the head safety guard (202), wherein warning signs being at least one of an audio, a visual and a haptic feedback.

21. The method (300) of operating the locking system (100) of the vehicle as claimed in claim 15, wherein during mobilisation of the vehicle, warning signs appear to warn the rider to wear the head safety guard (202), wherein warning signs being at least one of an audio, a visual and a haptic feedback.

22. The method (300) of operating the locking system (100) of the vehicle as claimed in claim 15, wherein wherein the power mode being when the running speed of the vehicle being above 20kmph.

23. The method (300) of operating the locking system (100) of the vehicle as claimed in claim 15, wherein the economy mode being when the running speed of the vehicle being below 20kmph.

24. The method (300) of operating the locking system (100) of the vehicle as claimed in claim 15, wherein the imaging device being disposed on any of the rear-view mirror.
